(19) **Europäisches Patentamt / European Patent Office / Office européen des brevets**

(11) **EP 1 605 684 B1**

(12) # EUROPEAN PATENT SPECIFICATION

(45) Date of publication and mention
of the grant of the patent:
**12.09.2018 Bulletin 2018/37**

(51) Int Cl.:
***H04N 1/56*** (2006.01)

(21) Application number: **04013198.9**

(22) Date of filing: **04.06.2004**

(54) **Method of processing a digital image in order to enhance the text portion of said image**

Verfahren zum Bearbeiten eines digitalen Bildes zu Verbesserung der Textregion dieses Bildes

Procédé de traitement d'une image numérique pour l'amélioration de la partie texte de cette image

(84) Designated Contracting States:
**AT BE BG CH CY CZ DE DK EE ES FI FR GB GR HU IE IT LI LU MC NL PL PT RO SE SI SK TR**

(43) Date of publication of application:
**14.12.2005 Bulletin 2005/50**

(73) Proprietor: **SICPA HOLDING SA**
**1008 Prilly (CH)**

(72) Inventors:
• **CATTARINUSSI, Serge**
**1423 Villars-Burquin (CH)**
• **RAPIN, Patrick**
**1543 Grandcour (CH)**

• **FINE, Kevin**
**1400 Yverdon-les-Bains (CH)**
• **BAROUD, Taha**
**1004 Lausanne (CH)**

(74) Representative: **Carvajal y Urquijo, Isabel et al**
**Clarke, Modet & Co.**
**Suero de Quiñones, 34-36**
**28002 Madrid (ES)**

(56) References cited:
EP-A- 0 395 032    EP-A- 1 107 577
EP-A- 1 385 329    US-A- 5 911 004

**Description**

This invention relates to an image processing method or apparatus for processing digital color data representing a color or grayscale image to enhance the rendition of the image, and more particularly the text portion of said image in subsequent presentations, in particular, but not exclusively, to such method and apparatus for use in color scanner printers, copiers, facsimile machines or the like.

In many existing designs of color copiers, the original image is scanned and digitized to provide red, green and blue (RGB) digital signals representing the relative intensities of these three colors at each pixel of the scanned image. The RGB data is converted to cyan, magenta, yellow and black (CMYK) signals by color processing software, and the CMYK signals are used to control the amount of cyan, magenta, yellow and black ink or toner deposited at the appropriate pixel in the printed image.

Since scanned images usually consist of large amounts of pixels, and since many image processing systems are implemented on hardware with limited memory resources, a processing technique is often employed whereby rolling image buffers or "swaths" as wide as the page move down the image as it is processed. Thanks to this architecture the processing system need only to store the pixels within the swath, instead of the much larger number of pixels in the entire image. This architecture will be called the color processing pipeline.

The color processing pipeline performs a series of processes to transform the color image data into a form that can be used by a printer. Among other tasks, the color processing pipeline must correct for various non-linearities and deficiencies in the apparatus, such as scanner inaccuracies and non-linearities in colored printing inks. These corrections must be optimized differently for different regions of the image. Here, the term "regions" is used to indicate different types of areas on a page, such as a text regions, or continuous tone color images. The color processing which words best for continuous tone colored images does not perform well in regions of text, *i.e.,* the processing of simple text on a white or plain colored background. (Here, the term "text" is used to include all black marks on the background, including normal text, line drawings and glyphs.) The text tends to be rendered both too light and with too much color in and around it. Similar problems arise in different kinds of equipment, such as copiers, laser or ink-jet color printers, color display units, color scanners and the like, where the image is represented as a collection of chromatic signals.

In addition, the rendition of other types of image regions, such as continuous tone gray images, is improved if treated by color processing specifically tailored to them. By continuous tone gray images it is meant what is often called "black and white" photos or images; images that are represented by many shades of gray. This is to be distinguished from true black and white images, such as text, which ideally contain only two colors: pure black and pure white.

It is also useful to detect pixels forming the background, or "paper" of the image. For example, it might be useful to remove the background color of originals which are printed on lightly colored paper.

Previous inventions have tended to focus solely on detecting regions of text. An example is U.S. Pat. No. 6,266,439 B1, which discloses a processing technique in which an input image is analyzed to detect groups of neighboring pixels which represent letters or other text objects. Such systems have proven quite effective at detecting text regions, but require swaths composed of enough lines of pixels to detect the text objects. Many systems are so limited in memory resources that the swaths contain only small parts of text objects at any one time.

An other example is given by the document EP-A-1 385 329 which describes a method of categorizing a mixed-content physical document in three area types corresponding to text pixels, background pixels and image pixels, in function of some thresholds in brightness and in saturation. These thresholds are very close and provide only to differentiate black character and white background from all others plain color or mixed color pixels. A considered pixel is classified as background pixel or image pixel only if all the consecutive pixels in the directions of a line and/or a column (20 1.x 10 c., i.e. all the 200 adjacent pixels previously transmitted in the line and the previous rows) are all considered in the same category. This classification still needs memory space.

Therefore, there is a need for a system that does not attempt to detect groups of neighboring pixels that form text or other kinds of objects.

Another important problem with color scanners is that colored pixels are often introduced into areas of documents that contain only text or grayscale material. An unwanted "color fringe" is often created in the transitions between black and white at edges, caused by tiny misalignments of the red, green and blue detectors normally employed within scanners. It is important that these colored pixels be removed. Because of the way most color printers work, grayscale material with even the smallest amount of color cannot be printed as quickly as the same material which contains absolutely no color. This is because when such an area is to be printed, a system can use exclusively black colorant and just a single pass. Even one color dot in a line, however, is enough to greatly impact the printing process. It requires the system to print in multiple, overlapping passes.

The scanner cannot simply be set to monochrome, for the grayscale material might be embedded within a color region. A user could be required to point out the grayscale material in advance, but preferably the operation should be entirely automatic. Therefore, there is a need for a system that automatically removes colored pixels from such regions of documents.

Finally, such a processing system should be easily calibrated for different hardware, such as different types of color scanners.

The aim of the present invention is therefore to provide a method for processing a digital input image in order to enhance the reproduction of the gray text or gray glyphs portion of said image while minimizing the use of memory and to overcome the above mentioned drawback of the prior art.

This goal is achieved thanks to a method comprising the characteristics recited in claim 1. Further characteristics are recited in the depending claims. The invention will now be better understood with reference to the following detailed description and with reference to the accompanying non limiting drawings in which:

Figure 1 is a schematic drawing of a conventional pipeline image processing system.

Figures 2 and 3 are projections onto the red green plane of a system to divide all colors in three dimensional RGB space into four classes: White, Light, Color or Dark. Figure 2 is the case where the thresholds fulfill the condition D_Sat_Th>W_Sat_Th, and Figure 3 illustrates the case where D_Sat_Th<W_Sat_Th.

Figure 4 is a flowchart of the algorithm to separate pixels of an image into one of four different types: Background, Text, Gray or Image.

Figure 5 is a flowchart of the part of the algorithm shown in figure 4 that decides if a pixel should be considered to be text or not.

Figure 6 illustrates the 5x5 summing filter used in figure 5.

Figure 7 shows a processing system to treat each pixel type differently.

Figure 8 illustrates a system to generate a text LUT used in Figure 5. This system represents a calibration of the system for a particular scanner.

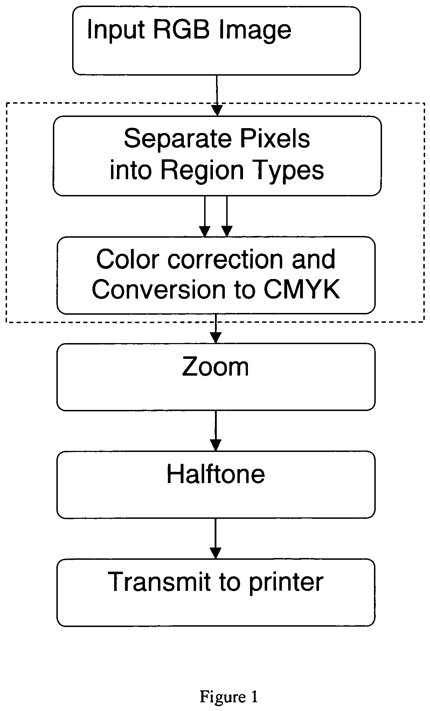

Figure 1 depicts the steps performed by a typical color processing pipeline which includes the present invention. This pipeline might be implemented inside a particular device, such as a color copier, or it might be implemented as software on a host computer.

The input color image might simply be a data file stored on a computer, or another source, but here, for sake of concreteness, it is considered to be a RGB bitmap file created by a color scanner.

After the input file has been read into the processing pipeline, the first process is to decide from which region type each pixel comes. In this embodiment, the possible region types are text or line drawing pixels, continuous tone color image pixels, continuous tone gray pixels and background pixels. The region type is transmitted to the next process along with the input RGB value, which is indicated by the presence of two arrows instead of just one. The next stage performs color corrections specific for the target printer, and also converts to the color used by the target printer. This process acts differently on each of the region types, due to the reasons discussed in the introduction. Here, the output colors are given as CMYK, or cyan, magenta, yellow and black (denoted by K). Some printers do not use black ink, and some printers use even more colors, such as light cyan or light magenta. However, it is assumed that the target printer is CMYK for sake of concreteness of the description.

The first two processes are surrounded by a dotted line because they are the subject of this invention; however several subsequent steps are necessary for the color processing pipeline. The image size must be changed using a zoom module to produce the desired output size (which normally involves enlarging the image), and the image must be halftoned to produce the illusion of continuous output color tones. Then the image data must be turned into a form understood by the particular printer used, and transmitted to the printer. However these steps are well known in the art and will no be described in detail in the present application. Instead focus will be given on the processes within the dotted line, which are the subject of this invention.

The general idea underlying the invention is firstly to classify the input pixels into different regions where the classification into different regions is based solely upon the color of each individual input pixel. Then, a pixel type will be determined for each input pixel using the color class of the input pixel as well as the color class of a small neighboring region. Lastly, the determined pixel type will be used for choosing between different correction processing method to be applied to the input pixel.

The first step in classifying input pixels into different regions is to divide the pixels into different color classes. In the particular embodiment described, four different color classes are used, namely: White, Light, Color and Dark pixels. In other embodiments, only two color classes or more than four color classes could be used without departing from the spirit of the invention.

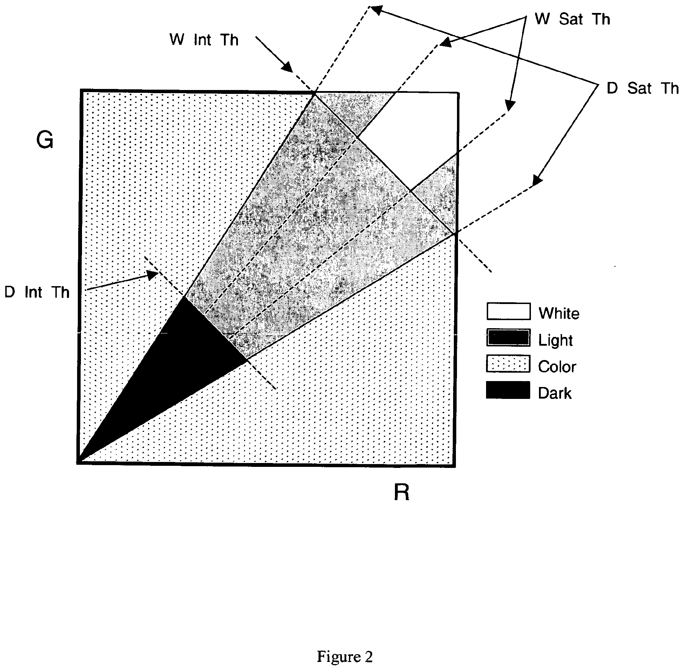

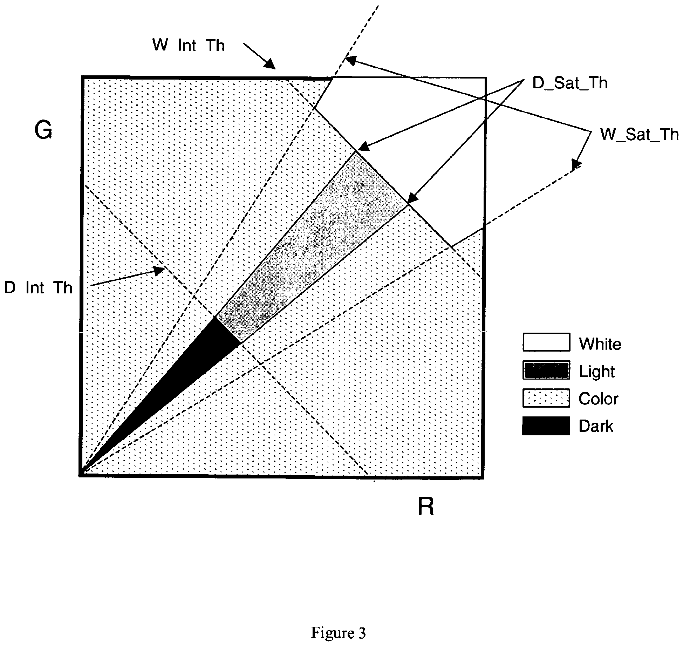

This classification into color classes may be based, by way of example, upon the Hue Saturation Intensity color coordinates, or HSI coordinates. A two-dimensional projection of these regions onto the red and green plane of RGB color space is shown in figures 2 and 3. The transformation between RGB coordinates and Saturation, S, and Intensity, I are given by

$$S = 1 - \frac{3}{(R + G + B)}\left[\min(R, G, B)\right]$$

$$I = \frac{1}{3}(R + G + B).$$

The four different classes in RGB space are defined by four different thresholds: a Dark Intensity Threshold denoted by D_Int_Th and a White Intensity Threshold denoted by W_Int_Th, as well as a Dark Saturation Threshold and a White Saturation Threshold, denoted by D_Sat_Th and W_Sat_Th respectively. The method to choose these four thresholds will be discussed in the following section on calibration.

The following pseudo code describes one algorithm that enables the determination of the color class denoted C_Class for each pixel:

```
If I > W_Int_Th
        If S < W_Sat_Th
              C_Class = White
        ElseIf S < D_Sat_Th
              C_Class = Light
        Else
              C_Class = Color
        End If
    ElseIf I > D_Int_Th
        If S < D_Sat_Th
              C_Class = Light
        Else
              C_Class = Color
        End If
    Else
        If S < D_Sat_Th
              C_Class = Dark
        Else
              C_Class = Color
        End If
    End If
```

Figure 2 illustrates the algorithm for the case where D_Sat_Th > W_Sat_Th, and figure 3 for the case where W_Sat_Th > D_Sat_Th.

It will be useful in what follows to consider four binary planes, d, c, 1 and w, (dark, color, light and white) which each have the same number of pixels as the original image. In one of these four planes, each pixel of the input image will have a value of 1 if the pixel in the image is dark, color, light or white. Of course, at one given pixel location only one of the planes can have a value of 1, and all other must have the value 0, since any pixel can only be of one color class. In what follows, these four pixel planes will be called the Quad image planes of the original image.

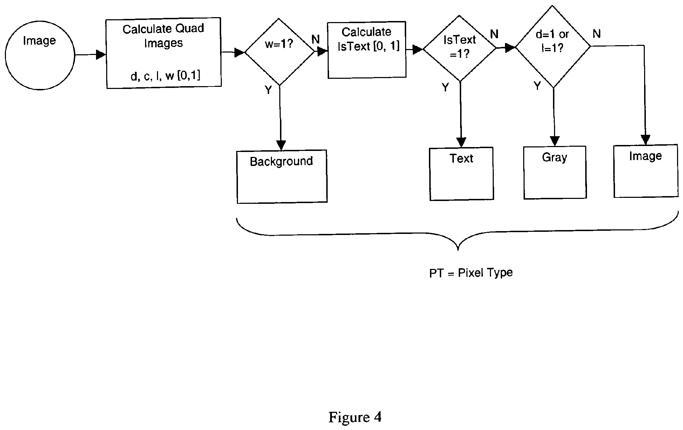

In figure 4, the algorithm that decides the region class of each input pixel is shown. First, the Quad image planes are calculated, using the algorithm described above. Then, if the w pixel is 1 (the pixel is white) the pixel is considered as Background. If however, the pixel is not white, then the Quad images are used to calculate an entity called hereafter IsText. If IsText is 1, then the pixel is classified as Text. If not, the pixel is tested to see if it is light or dark. If it is light, then the pixel is classified as Gray, and if not the pixel is classified as Image.

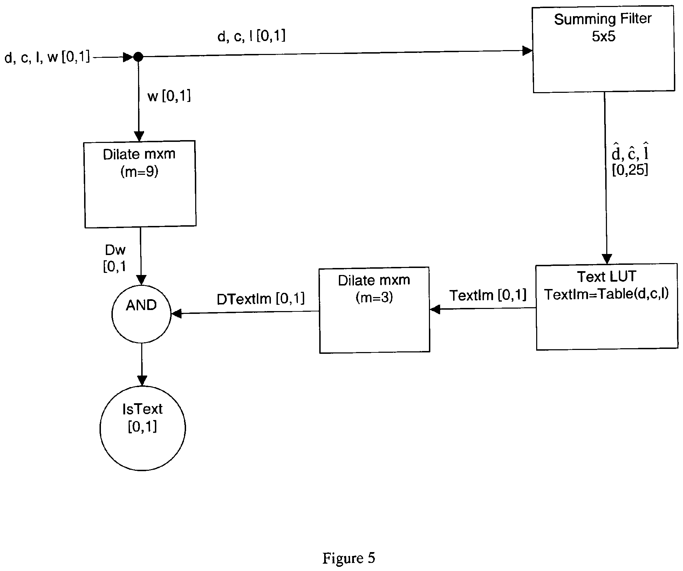

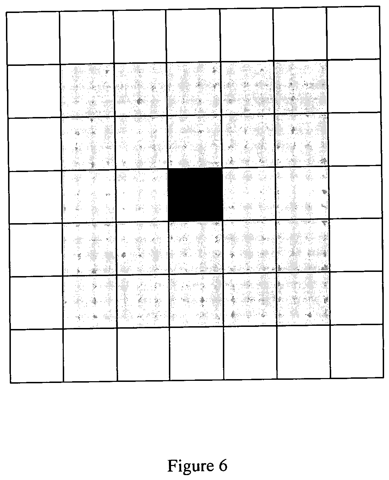

A crucial part of algorithm is the calculation of the entity IsText which is illustrated in Figure 5. First, the 3 planes d, c and 1 are passed into a 5x5 summing filter. This means that all 25 pixels in a rectangular zone extending two rows and two columns before the pixel and two rows and two columns after the pixel are summed separately for each of the planes d, c and 1. This zone is illustrated in gray in Figure 6, where the pixel under consideration is shown, in the center of the structure, with a black background. For pixels in the image which lie on the bordering of two lines of the image, there are missing values which are accounted for by padding the outside of the d, c and 1 images with two lines of zeros.

The summing process produces three numbers for each pixel, or three more planes $\hat{d}$, $\hat{c}$ and $\hat{l}$, where the hat ^ symbol indicates that now the three planes $\hat{d}$, $\hat{c}$ and $\hat{l}$ are different than the binary planes d, c, and l, and have values ranging from 0 to 25. These three numbers are used as indices into a look-up table, hereafter denoted by LUT, which has been prepared using the calibration process which will be described in a following section. This LUT will be denoted by the wording Text LUT. The Text LUT will produce a one bit number for each pixel, denoted TextIm. This number will be 1 for pixels which are likely to be text. Thus the summing process and the Text LUT together produce another binary image plane.

Because each of $\hat{d}$, $\hat{c}$ and $\hat{l}$ can have one of 26 different values, the total number of entries in the LUT must be $26^3 = 17576$, though it should be clear from the above discussion that the sum of $\hat{d}$, $\hat{c}$ and $\hat{l}$ cannot be greater than 25 for any one pixel, so that many entries are not necessary, although this fact will not be used in what follows.

Before continuing, here is a brief summary of the above algorithm. For non-white pixels, one independently sum the number of dark, colored and light pixels in the neighborhood of the pixel, and use these sums as indices into the Text LUT. The text LUT returns either a zero or one to be used as the value of TextIm at the location of the pixel. White pixels are all given a value of zero for TextIm.

Before deciding which pixels are text, the nonzero regions of TextIm are grown so that pixels on the borders of text objects, which often have a value of zero for TextIm, are included as text. To grow these regions a process well-known in imaging science called dilation is used. During dilation, the value of a pixel is replaced by the maximum value found in a neighborhood of pixels surrounding and including the pixel being analyzed. The values are the values before the plane was dilated. In this case, the neighborhood is taken as a 3x3 window of the TextIm plane, which means a square zone of nine pixels is considered which is centered upon the pixel being analyzed. This process tends to grow regions of pixels with a value of 1 by at least one layer. For pixels at the edge of the image, a pad of zeros is added around the TextIm plane in a similar manner as with the 5x5 summing filter described above. The result of this dilation process is the Dilated TextIm plane, denoted by DTextIm in figure 5.

Up to this point, pixels which are likely to be text have been identified by consulting a LUT, and these groups of pixels have been slightly enlarged by applying a dilation process. However, experiments have shown that this process also mistakenly identifies some pixels within non-text regions as being text pixels. The next step is to apply an additional filter which only accepts those pixels as text which are near to background regions. Of course, this will not identify pixels in the interior of large text characters as being text, but experiments shows that it is sufficient to only enhance the border of large text characters to significantly improve their appearance.

In order to identify pixels which are near background pixels, the plane of background pixels, which is equivalent to the w, or white plane, is dilated. Here, the dilation is performed using the same process as for the TextIm plane, except that a larger neighborhood of 9x9 pixels is used. As before, the pixel under consideration is taken to be at the center of the zone, and the pixels are considered only as they were before dilation, edges of the image are padded with zeros. This dilated background plane, which is denoted by Dw, will have ones (1) for all pixels belonging to the background, plus have ones for several layers of pixels surrounding all the "holes" in the background, such as made by images and text.

Finally, the binary value IsText is calculated by performing a logical AND between the DTextIm plane and the Dw image plane. This means that only pixels that were identified by the LUT to be text candidates, and which have nearby background pixels will be considered as text.

Returning to Figure 1, the description of the algorithm that classifies each pixel into a region type has been completed. Note that the algorithm only requires a 9 line swath to be in memory at any one time. This can be compared with the height of 12-point typeface, which is typically one sixth of an inch, or about 50 lines if scanned at 300 dots per inch. Therefore this algorithm can accurately identify text pixels even though only a small portion of the character is in memory at any one time.

The size of neighborhood window (3x3) and (9x9) in the above mentioned dilation processes as well as the size of the summing filter (5x5) are given by way of example and it will be obvious to modify these numbers to achieve the same overall result of the process. Good results were obtained when the size of the neighborhood window for the dilation process applied to the value TextIm is a m x m window where m is comprised between 3 and 5. Regarding the dilation process applied to the white plane, a ml x ml window was used where fulfill the condition ml >= 3 x m.

The numbers given are a good compromise between the efficiency and the size of the memory required for performing the process but may be increased if more memory becomes available.

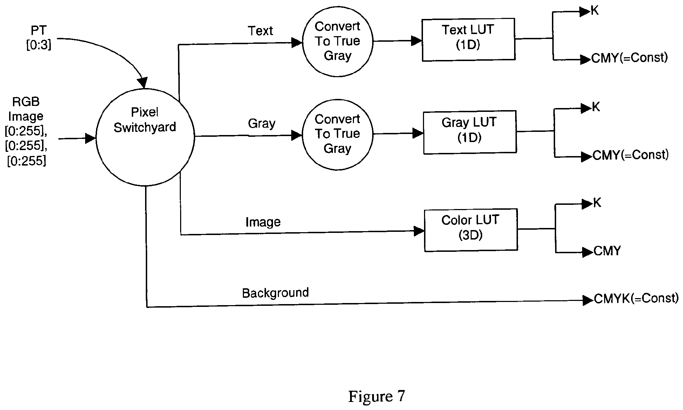

A convenient way to transmit the pixel type to the next process in figure 1 is with a plane of values for each pixel which is denoted by PT, or Pixel Type. Each pixel in the PT plane can take one of four values, such as 0, 1, 2 or 3, according to if the original pixel in the image is to be considered Background, Text, Gray or Image. These PT values will be used in the following color correction and conversion stage to optimally treat each type of pixel. This next stage is schematically represented in Figure 7. Here the PT value of a pixel is used in what is denoted as a "pixel switchyard" to send the input pixel into one of four different processing algorithms. Now, a particular embodiment of these algorithms that produces particularly clear and legible printed images will be considered.

The pixels classified as Text are first converted to true gray. A true gray pixel is one for which R, G and B all have equal values, and as previously mentioned, it is advantageous to only use the black (K) ink to print these pixels. In addition, the gray level is changed using a 1D text LUT. This 1D LUT implements what is typically know as a gamma correction, or dot size correction, which corrects for printer non-linearity to produce the correct printed gray level. For text pixels, this LUT is also normally designed to push the gray level of text pixels to be darker, so as to emphasize the contrast between text pixels and white paper, thereby giving the text a sharper appearance.

Gray pixels are treated in a similar fashion, although only the gamma correction is applied in the Gray LUT, *i.e.,* the gray levels are not normally pushed to have darker values. Gray pixels may be the interior of characters, or may be continuous gray tone images, in which case darkening the pixel would have the negative effect of darkening the image. However, it will still be advantageous to print the gray pixels using black ink, although in figure 7 the possibility that both Text and Gray pixels might be printed using some colored ink was left open.

One negative effect of converting Gray pixels to be true gray (R, G, B equal) is that lightly colored regions in continuous color images will lose their color. However, the system is normally calibrated so that only very lightly-colored pixels are considered as gray, which results in color losses which are almost unnoticeable to the observer. However, the system normally is supplied with a software switch to disable the separate processing of gray pixels, and to instead treat these pixels as image pixels.

Image pixels are treated with a 3 dimensional LUT that is produced by a calibration process which is outside the scope of our discussion. This LUT corrects for the nonlinear effects of combining different colored inks. An example of such a 3D LUT is a 9x9x9 dimensional LUT of values of CMYK for each of R, G and B equal to 0, 32, 64, 96, 128, 160, 192, 224 and 255. There are $9^3$ = 729 entries for each of CMYK in this table, and colors which lie in between are interpolated from the calibrated entries. This process is well-known in the art and works well to produce realistic renderings of continuous color tone images.

Finally, background pixels are normally simply transformed to white, although the possibility that this could be changed to a different color was left open in figure 7

In addition to the above image processing algorithm, a process for obtaining the values of the color thresholds and the Text LUT for a particular device was created. In other words, a calibration procedure to find the parameters for any particular scanner or input device was created an will now be described in detail.

For the calibration procedure, one uses a set of images, taken to be representative of the types of images to be scanned by a typical user. By way of example, a set of twenty images that represented a mix of types, such as scanned images from magazines including color images, scanned images from scientific papers with line drawings, and scanned images from textbooks including both color and grayscale images was used . Then a resolution for the scanner to be used, for example 300 dots per inch is chosen. Some scanners can scan at several different resolutions, and also might have other parameters that can be set. It might be necessary to calibrate the scanner separately for each possible set of parameters that change the image.

Once the set of calibration images and parameters have been selected, the different regions are characterized by eye. This was done with the aid of a computer program that displays the scanned images on a computer monitor, and allows the user to select different regions in each calibration image, and then to label each region by choosing from a list. At the end of this process one has produced and stored an array which is the same size as the number of pixels in the scanned image, where each array cell contains a value which labels the corresponding pixel in the scanned image as background, text, image or unknown. This array will be called the "classification" array.

The color thresholds are now chosen using the classification arrays. To choose W_Int_Th and W_Sat_Th, one uses the classification arrays to choose only the background pixels of the calibration images. The saturation, S, and intensity, I, of each pixel are then calculated using the previously given equations, and form a histogram of the values. Next, W_Int_Th is chosen to be the value of intensity that is less than 99 percent of the intensities of all the pixels that have been characterized as background. Likewise, the saturation threshold is chosen to be the value of saturation that is greater than 99 percent of the saturation values of all the background pixels. Of course, the value of 99 percent is somewhat arbitrary, but experiments and trials shows that it results in a good separation of pixel regions.

Analogously, all the text pixels are selected , and D_Int_Th is chosen to be the value Intensity that is greater than 99 percent of the intensities of all the text pixels, and D_Sat_Th is selected to be the saturation that is greater than 99 percent of the saturations of all text pixels.

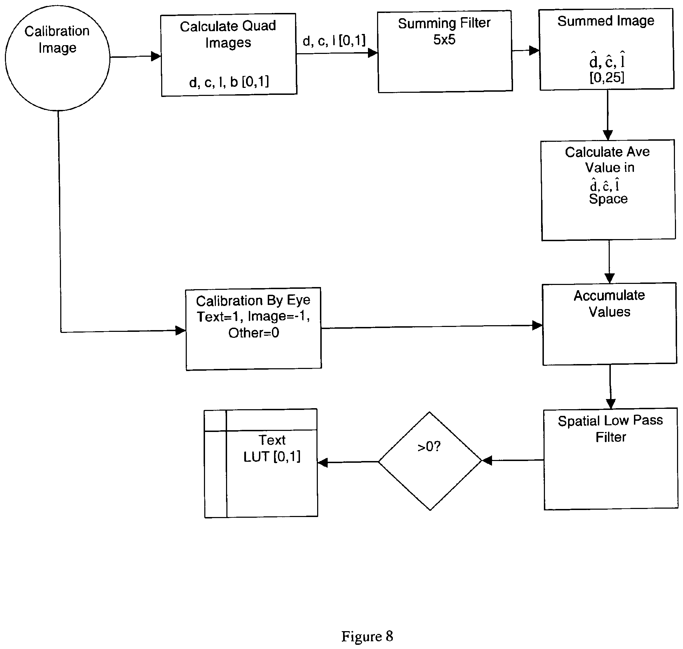

Once the color thresholds have been chosen, the Text LUT may be created. The procedure is depicted in figure 8. Each calibration image is analyzed using the color thresholds to create the Quad images d, c and I. Then a 5x5 summing window is used to calculate $\hat{d}$, $\hat{c}$ and $\hat{I}$, exactly as in figure 5. At this point, it is useful to envision all the values of $\hat{d}$, $\hat{c}$ and $\hat{I}$ as a three-dimensional array, with each axis having integer values from 0 to 25. For each pixel in a calibration image, the values of $\hat{d}$, $\hat{c}$ and $\hat{I}$ correspond to one cell in this array. All cell arrays are initialized to a value of 0. Then for each pixel in all the calibration images, then the corresponding classification array is consulted , and if the pixel is considered a text pixel, a 1 is added to the cell in $\hat{d}$, $\hat{c}$ and $\hat{I}$ space. If the pixel is considered an image, a -1 is added to this array cell, and if the pixel is background or unknown, a zero is added. At the end of this accumulation process a three dimensional array of both positive and negative integers, along with some cells containing 0 is produced. Cells with positive values identify pixels likely to be text, and negative values pixels which are likely to be images.

One limitation of this method, is that certain values of $\hat{d}$, $\hat{c}$ and $\hat{I}$ might never appear in the calibration images. Some of these cells are "forbidden," such as cells where $\hat{d}$, $\hat{c}$ and $\hat{I}$ sum to more than 25. The values in such forbidden cells are not important, because they will never be used in the subsequent processing. However, cells which are not forbidden might also not exist in the calibration images, simply because by chance they never happen to occur. Such a cell would contain a value of 0, but might be surrounded by cells with large positive values, and should be considered text. In order to correct this problem, a three-dimensional low pass filter is applied to the $\hat{d}$, $\hat{c}$ and $\hat{I}$ array. Here a filter that replaces the cell value at the center of a 3x3x3 averaging cube by the average value in the cube was used. Cells for which the averaging cube has values $\hat{d}$, $\hat{c}$ and $\hat{I}$ outside of the range 0 to 25 must be treated differently. Here, it was chosen to simply not include cells outside the range as part of the averaging space. Such a scheme is somewhat arbitrary, and other averaging techniques might also work well.

The final step is to binarize the LUT. All cell values greater than 0 are set to 1, and all others are set to zero. This completes the creation of the Text LUT.

While there has been illustrated and described what is at present considered to be a preferred embodiment of the of the invention, it will be appreciated that numerous changes and modifications are likely to occur to those skilled in the art, and the scope of the present invention is defined by the appended claims.

**Claims**

1. A method of processing a digital gray or color image in order to enhance the reproduction of black or gray marks of said image, comprising the following steps:

    - classifying the input pixels into four different color classes, denoted as white (w), light (l), color (c) and dark (d), by determining for each pixel, among the Hue Saturation Intensity color coordinate system, its saturation (S) and its intensity (I) values and by comparing the resulting saturation and intensity values (S & I) to four pre-determined color thresholds,
    - using said color class (w, l, c, d) of each individual pixel, along with the color classes of pixels of a small neighboring region , to further classify each individual pixel into a pixel type (PT) among four pixel types denoted as background type, text type, gray type and image type, by applying the following rules:

        -- if the color class of the individual pixel is white , classifying said individual pixel as background type,
        -- for non-white pixel color classes , separately summing the numbers of all light (l), colored (c) and dark (d) classified pixels in the neighborhood of the individual pixel in a summing filter, thus producing three sum numbers ($\hat{d}$, $\hat{c}$ and $\hat{l}$) and using these sum numbers as three indices into a look-up table (Text LUT) to classify the individual pixel type (PT) as text candidates, and applying an additional filter such that only pixels that are text candidates and which have nearby background pixels are classified as text type,

    - using said pixel type (PT) to determine which color correction process to apply to the corresponding pixel.

2. A method according to claim 1, **characterized in that** it comprises the following steps:

    - building a four plane image in which each image plane, denotable as w (white), 1 (light), c (color) and d (dark), has the same number of pixels as the original image and where at each pixel location a value of 1 is set in the plane corresponding to the color class of the pixel and a value of 0 in the three other planes,
    - using these four image planes (w,l,c,d) to determine for each pixel the pixel type (PT),

3. Method according to claim 2, **characterized in that** the pixel type (PT) is determined using the following rules:

    - if the w component of the pixel is equal to 1, assigning the value 'background' to the pixel Type (PT),
    - if the w component of the pixel is equal to 0, calculating a binary value denotable as IsText using the image planes (w,l,c,d),
    - if the value of Istext is equal to 1, assigning the value 'text' to the pixel Type (PT),
    - if the value of Istext is equal to 0, then if either of the d or the 1 pixel in the four plane image have a value of 1, assigning the value 'gray' to the pixel Type (PT),
    - otherwise, assigning the value 'image' to the pixel Type (PT).

**4.** Method according to claim 3, **characterized in that** the binary value Istext is calculated using the following steps:

- passing the three planes d,c and 1 into a summing filter where all pixels in a rectangular zone extending nr rows and nc columns before and after the pixel are summed separately for each of the three planes d, c and 1 producing 3 numbers ($\hat{d}$, $\hat{c}$ and $\hat{l}$) for each pixel processed,
- using the three numbers ($\hat{d}$, $\hat{c}$ and $\hat{l}$) as an index into a binary text lookup table (Text LUT) for obtaining a binary value denotable as TextIm,
- applying a dilation process to the value TextIm with an mr x mc window,
- applying a dilation process to the w plane with a kr x kc window,
- performing a logical AND between the two dilated entities.

**5.** Method according to one of the preceding claims, **characterized in that** the pixels having a pixel type (PT) value equal to 'text' are first converted to true gray and then gamma corrected.

**6.** Method according to one of the preceding claims, **characterized in that** the pixels having a pixel type (PT) value equal to 'gray' are first converted to true gray and then gamma corrected.

**7.** Method according to one of the preceding claims, **characterized in that** the pixels having a pixel type (PT) value equal to 'image' are processed with a three dimensional look-up table (3D LUT).

**8.** Method according to one of the preceding claims, **characterized in that** the pixels having a pixel type (PT) value equal to 'background' are simply transformed to a color chosen from the background.

**9.** Method according to one of the preceding claims, **characterized in that** the pre-determined color thresholds comprise a Dark Intensity Threshold (D Int Th), and the Dark Intensity Threshold is set to a value of Intensity which is greater than 99 percent of the intensities of all the 'text' pixels of a calibration image.

**10.** Method according to one of the preceding claims, **characterized in that** the pre-determined color thresholds comprise a Dark Saturation threshold (D Sat Th), and the Dark Saturation Threshold is set to a value of Saturation which is greater than 99 percent of the saturations of all the 'text' pixels of a calibration image.

**11.** Method according to one of the preceding claims, **characterized in that** the pre-determined color thresholds comprise a White Intensity Threshold (W Int Th), and the White Intensity Threshold is set to a value of Intensity which is less than 99 percent of the intensities of all the 'background' pixels of a calibration image.

**12.** Method according to one of the preceding claims, **characterized in that** the pre-determined color thresholds comprise a White Saturation Threshold (W Sat Th), and the White Saturation Threshold is set to a value of Saturation which is greater than 99 percent of the saturations of all the 'background' pixels of a calibration image.

**13.** A system for processing a digital gray or color image in order to enhance the reproduction of black or gray marks of said image, comprising:

- means for classifying the input pixels into four different color classes, denoted as white (w), light (l), color (c) and dark (d), by determining for each pixel, among the Hue Saturation Intensity color coordinate system, its saturation (S) and intensity (I) values and by comparing the resulting saturation and intensity values (S & I) to four pre-determined color thresholds,
- means for using said color class (w, 1, c, d) of each individual pixel, along with the color classes of pixels of a small neighboring region , to further classify each individual pixel into a pixel type (PT) among four pixel types denoted as background type, text type, gray type and image type, by applying the following rules:

-- if the color class of the individual pixel is white , classifying said individual pixel as background type,
-- for non-white pixel color classes , separately summing the numbers of all light (1), colored (c) and dark (d) classified pixels in the neighborhood of the individual pixel in a summing filter, thus producing three sum numbers ($\hat{d}$, $\hat{c}$ and $\hat{l}$) and using these sum numbers as three indices into a look-up table (Text LUT) to classify the individual pixel type (PT) as text candidates, and applying an additional filter such that only pixels that are text candidates and which have nearby background pixels are classified as text type,

- means for using said pixel type (PT) to determine which color correction process to apply to the corresponding pixel.

**Patentansprüche**

1. Verfahren zum Bearbeiten eines digitalen Graustufen- oder Farbbildes, um die Wiedergabe von schwarzen oder grauen Markierungen des Bildes zu verbessern, folgende Schritte umfassend:

   - Klassifizieren der Eingangsbildpunkte in vier verschiedene Farbklassen, bezeichnet als weiß (white, w), hell (light, 1), farbig (color, c) und dunkel (dark, d), indem für jeden Bildpunkt im HSI (Hue, Saturation, Intensity)-Farbkoordinatensystem seine Sättigungs- (S) und seine Intensitäts (I)-Werte bestimmt werden und indem die resultierenden Sättigungs- und Intensitätswerte (S & I) mit vier vordefinierten Farbschwellwerten verglichen werden,
   - Verwenden der Farbklasse (w, l, c, d) jedes einzelnen Bildpunkts zusammen mit den Farbklassen der Bildpunkte einer kleinen benachbarten Region, um ferner jeden einzelnen Bildpunkt in einen Bildpunkttyp (Pixel Type, PT) von vier Bildpunkttypen, bezeichnet als Hintergrundtyp, Texttyp, Grautyp und Bildtyp, zu klassifizieren, indem die folgenden Regeln zur Anwendung kommen:

     -- falls die Farbklasse des einzelnen Bildpunkts weiß ist, Klassifizieren des einzelnen Bildpunkts als Hintergrundtyp,
     -- bei nicht weißen Bildpunktfarbklassen, separates Addieren der Anzahl aller als hell (l), farbig (c) und dunkel (d) klassifizierten Bildpunkte in der Nachbarschaft des einzelnen Bildpunkts in einem Summierfilter, wodurch drei Summenwerte ($\hat{d}$, $\hat{c}$ und $\hat{l}$) erzeugt werden, und Verwenden dieser Summenwerte als drei Indizes in eine Nachschlagtabelle (Text-LUT), um den einzelnen Bildpunkttyp (PT) als Textkandidaten zu klassifizieren, und Anwenden eines zusätzlichen Filters derart, dass nur Bildpunkte, die Textkandidaten sind und die nahegelegene Hintergrundbildpunkte haben, als Texttyp klassifiziert werden,

   - Verwenden des Bildpunkttyps (PT), um zu bestimmen, welcher Farbkorrekturprozess auf den betreffenden Bildpunkt anzuwenden ist.

2. Verfahren gemäß Anspruch 1, **dadurch gekennzeichnet, dass** es folgende Schritte umfasst:

   - Aufbauen eines Bildes mit vier Ebenen, in dem jede Bildebene, die als w (weiß), l (hell), c (farbig) und d (dunkel) bezeichnet werden können, dieselbe Anzahl Bildpunkte hat wie das Originalbild und wobei an jedem Bildpunktort ein Wert von 1 in der Ebene, die der Farbklasse des Bildpunkts entspricht, und ein Wert von 0 in den drei anderen Ebenen gesetzt ist,
   - Verwenden dieser vier Bildebenen (w, l, c, d), um für jeden Bildpunkt den Bildpunkttyp (PT) zu bestimmen.

3. Verfahren gemäß Anspruch 2, **dadurch gekennzeichnet, dass** der Bildpunkttyp (PT) unter Anwendung der folgenden Regeln bestimmt wird:

   - falls die w-Komponente des Bildpunkts gleich 1 ist, Zuweisen des Wertes "Hintergrund" zum Bildpunkttyp (PT),
   - falls die w-Komponente des Bildpunkts gleich 0 ist, Berechnen eines Binärwertes, der als IsText bezeichnet werden kann, unter Verwendung der Bildebenen (w, l, c, d),
   - falls der Wert Istext gleich 1 ist, Zuweisen des Wertes "Text" zum Bildpunkttyp (PT),
   - falls der Wert von Istext gleich 0 ist, dann, wenn entweder der d- oder der l-Bildpunkt in dem Vier-Ebenen-Bild einen Wert von 1 hat, Zuweisen des Wertes "grau" zum Bildpunkttyp (PT),
   - andernfalls Zuweisen des Wertes "Bild" zum Bildpunkttyp (PT).

4. Verfahren gemäß Anspruch 3, **dadurch gekennzeichnet, dass** der Binärwert Istext mithilfe folgender Schritte berechnet wird:

   - Zuführen der drei Ebenen d, c und l in ein Summierfilter, wo alle Bildpunkte in einer rechteckigen Zone, die sich über nr Zeilen und nc Spalten vor und nach dem Bildpunkt erstreckt, separat für jede der drei Ebenen d, c und l addiert werden, was 3 Werte ($\hat{d}$, $\hat{c}$ und $\hat{l}$) für jeden bearbeiteten Bildpunkt ergibt,
   - Verwenden der drei Werte ($\hat{d}$, $\hat{c}$ und $\hat{l}$) als Index in eine binäre Textnachschlagetabelle (Text Lookup Table, Text-LUT), um einen Binärwert zu erhalten, der als TextIm bezeichnet werden kann,
   - Anwenden eines Erweiterungsprozesses auf den Wert TextIm mit einem mr x mc-Fenster,

- Anwenden eines Erweiterungsprozesses auf die w-Ebene mit einem kr x kc-Fenster,
- Durchführen einer logischen UND-Operation zwischen den beiden erweiterten Entitäten.

5. Verfahren gemäß einem der vorstehenden Ansprüche, **dadurch gekennzeichnet, dass** die Bildpunkte mit einem Bildpunkttyp (PT)-Wert von "Text" zuerst in echte Graustufen umgewandelt und anschließend gammakorrigiert werden.

6. Verfahren gemäß einem der vorstehenden Ansprüche, **dadurch gekennzeichnet, dass** die Bildpunkte mit einem Bildpunkttyp (PT)-Wert von "grau" zuerst in echte Graustufen umgewandelt und anschließend gammakorrigiert werden.

7. Verfahren gemäß einem der vorstehenden Ansprüche, **dadurch gekennzeichnet, dass** die Bildpunkte mit einem Bildpunkttyp (PT)-Wert von "Bild" mit einer dreidimensionalen Nachschlagtabelle (3D-LUT) bearbeitet werden.

8. Verfahren gemäß einem der vorstehenden Ansprüche, **dadurch gekennzeichnet, dass** die Bildpunkte mit einem Bildpunkttyp (PT)-Wert "Hintergrund" einfach in eine aus dem Hintergrund ausgewählte Farbe umgewandelt werden.

9. Verfahren gemäß einem der vorstehenden Ansprüche, **dadurch gekennzeichnet, dass** die vorbestimmten Farbschwellwerte einen Dunkelintensitätsschwellwert (Dark Intensity Threshold, D Int Th) umfassen und dass der Dunkelintensitätsschwellwert auf einen Intensitätswert eingestellt ist, der größer als 99 Prozent der Intensitäten aller "Text"-Bildpunkte eines Kalibrierbildes ist.

10. Verfahren gemäß einem der vorstehenden Ansprüche, **dadurch gekennzeichnet, dass** die vorbestimmten Farbschwellwerte einen Dunkelsättigungsschwellwert (Dark Saturation Threshold, D Sat Th) umfassen und dass der Dunkelsättigungsschwellwert auf einen Sättigungswert eingestellt ist, der größer als 99 Prozent der Sättigungen aller "Text"-Bildpunkte eines Kalibrierbildes ist.

11. Verfahren gemäß einem der vorstehenden Ansprüche, **dadurch gekennzeichnet, dass** die vorbestimmten Farbschwellwerte einen Weißintensitätsschwellwert (White Intensity Threshold, W Int Th) umfassen und dass der Weißintensitätsschwellwert auf einen Intensitätswert eingestellt ist, der kleiner als 99 Prozent der Intensitäten aller "Hintergrund"-Bildpunkte eines Kalibrierbildes ist.

12. Verfahren gemäß einem der vorstehenden Ansprüche, **dadurch gekennzeichnet, dass** die vorbestimmten Farbschwellwerte einen Weißsättigungsschwellwert (White Saturation Threshold, W Sat Th) umfassen und dass der Weißsättigungsschwellwert auf einen Sättigungswert eingestellt ist, der größer als 99 Prozent der Sättigungen aller "Hintergrund"-Bildpunkte eines Kalibrierbildes ist.

13. System zum Bearbeiten eines digitalen Graustufen- oder Farbbildes, um die Wiedergabe von schwarzen oder grauen Markierungen des Bildes zu verbessern, umfassend:

    - Mittel zum Klassifizieren der Eingangsbildpunkte in vier verschiedene Farbklassen, bezeichnet als weiß (white, w), hell (light, l), farbig (color, c) und dunkel (dark, d), indem für jeden Bildpunkt im HSI (Hue, Saturation, Intensity)-Farbkoordinatensystem seine Sättigungs- (S) und Intensitäts (I)-Werte bestimmt werden und indem die resultierenden Sättigungs- und Intensitätswerte (S & I) mit vier vordefinierten Farbschwellwerten verglichen werden,
    - Mittel zum Verwenden der Farbklasse (w, l, c, d) jedes einzelnen Bildpunkts zusammen mit den Farbklassen der Bildpunkte einer kleinen benachbarten Region, um ferner jeden einzelnen Bildpunkt in einen Bildpunkttyp (Pixel Type, PT) von vier Bildpunkttypen, bezeichnet als Hintergrundtyp, Texttyp, Grautyp und Bildtyp, zu klassifizieren, indem die folgenden Regeln zur Anwendung kommen:

        -- falls die Farbklasse des einzelnen Bildpunkts weiß ist, Klassifizieren des einzelnen Bildpunkts als Hintergrundtyp,
        -- bei nicht weißen Bildpunktfarbklassen, separates Addieren der Anzahl aller als hell (l), farbig (c) und dunkel (d) klassifizierten Bildpunkte in der Nachbarschaft des einzelnen Bildpunkts in einem Summierfilter, wodurch drei Summenwerte ($\hat{d}$, $\hat{c}$ und $\hat{l}$) erzeugt werden, und Verwenden dieser Summenwerte als drei Indizes in eine Nachschlagtabelle (Text-LUT), um den einzelnen Bildpunkttyp (PT) als Textkandidaten zu klassifizieren, und Anwenden eines zusätzlichen Filters derart, dass nur Bildpunkte, die Textkandidaten sind und die nahegelegene Hintergrundbildpunkte haben, als Texttyp klassifiziert werden,

- Mittel zum Verwenden des Bildpunkttyps (PT), um zu bestimmen, welcher Farbkorrekturprozess auf den betreffenden Bildpunkt anzuwenden ist.

**Revendications**

1. Procédé de traitement d'une image numérique en gris ou en couleurs destiné à améliorer la reproduction des marques noires ou grises de ladite image, comprenant les étapes suivantes :

   classer les pixels d'entrée en quatre classes de couleur différentes, désignées par : blanc (w), clair (l), couleur (c) et foncé (d), en déterminant pour chaque pixel, dans le système de coordonnées de couleurs Teinte, Saturation, Intensité, ses valeurs de saturation (S) et d'intensité (I) et en comparant les valeurs de saturation et d'intensité résultantes (S & I) à quatre seuils de couleur prédéterminés,
   utiliser ladite classe de couleur (w, l, c, d) de chaque pixel individuel, ainsi que les classes de couleur des pixels d'une petite région avoisinante, pour classer en outre chaque pixel individuel en un type de pixel (PT) parmi quatre types de pixel désignés par : type fond, type texte, type gris et type image, en appliquant les règles suivantes :

   si la classe de couleur du pixel individuel est « blanc », classer ledit pixel individuel comme étant de type fond,
   pour les classes de couleur de pixel non « blanc », additionner séparément les nombres de tous les pixels classés « clair » (l), « couleur » (c) et « sombre » (d) dans le voisinage du pixel individuel dans un filtre de sommation, en produisant ainsi trois nombres sommes ($\hat{d}$, $\hat{c}$ et $\hat{l}$) et utiliser ces nombres sommes comme trois indices dans une table de recherche (Text LUT) pour classer le type de pixel individuel (PT) comme candidats de texte, et appliquer un filtre supplémentaire de manière à ce que seuls les pixels qui sont des candidats de texte et qui ont des pixels de fond proches soient classés comme étant de type texte,
   utiliser ledit type de pixel (PT) pour déterminer quel processus de correction de couleur doit être appliqué au pixel correspondant.

2. Procédé selon la revendication 1, **caractérisé en ce qu'**il comprend les étapes suivantes :

   construire une image à quatre plans dans laquelle chaque plan d'image, désignable par w (blanc), l (clair), c (couleur) et d (sombre), a le même nombre de pixels que l'image d'origine et où, à chaque emplacement de pixel, une valeur de 1 est définie dans le plan correspondant à la classe de couleur du pixel et une valeur de 0 dans les trois autres plans,
   utiliser ces quatre plans d'image (w, l, c, d) pour déterminer, pour chaque pixel, le type de pixel (PT).

3. Procédé selon la revendication 2, **caractérisé en ce que** le type de pixel (PT) est déterminé au moyen des règles suivantes :

   si la composante w du pixel est égale à 1, attribuer la valeur « background » au type de pixel (PT),
   si la composante w du pixel est égale à 0, calculer d'une valeur binaire désignable par « IsText » au moyen des plans d'image (w, l, c, d),
   si la valeur de « IsText » est égale à 1, attribuer la valeur « text » au type de pixel (PT),
   si la valeur de « IsText » est égale à 0, alors, si l'un ou l'autre des pixels d ou l de l'image à quatre plans a une valeur de 1, attribuer la valeur « gray » au type de pixel (PT),
   sinon, attribuer la valeur « image » au type de pixel (PT) .

4. Procédé selon la revendication 3, **caractérisé en ce que** la valeur binaire « IsText » est calculée au moyen des étapes suivantes :

   passer les trois plans d, c et l dans un filtre de sommation où tous les pixels d'une zone rectangulaire s'étendant sur nr lignes et nc colonnes avant et après le pixel sont additionnés séparément pour chacun des trois plans d, c et l, en produisant 3 nombres ($\hat{d}$, $\hat{c}$ et $\hat{l}$) pour chaque pixel traité,
   utiliser les trois nombres ($\hat{d}$, $\hat{c}$ et $\hat{l}$) comme index dans une table de recherche de texte binaire (Text LUT) pour obtenir une valeur binaire désignable par « TextIm »,
   appliquer un processus de dilatation à la valeur « TextIm » avec une fenêtre mr x mc,
   appliquer un processus de dilatation au plan w avec une fenêtre kr x kc,
   exécuter un ET logique entre les deux entités dilatées.

**5.** Procédé selon l'une des revendications précédentes, **caractérisé en ce que** les pixels ayant une valeur de type de pixel (PT) égale « text » sont tout d'abord convertis en vrai gris, puis corrigés en gamma.

**6.** Procédé selon l'une des revendications précédentes, **caractérisé en ce que** les pixels ayant une valeur de type de pixel (PT) égale à « gray » sont tout d'abord convertis en vrai gris, puis corrigés en gamma.

**7.** Procédé selon l'une des revendications précédentes, **caractérisé en ce que** les pixels ayant une valeur de type de pixel (PT) égale à « image » sont traités avec une table de recherche tridimensionnelle (3D LUT) .

**8.** Procédé selon l'une des revendications précédentes, **caractérisé en ce que** les pixels ayant une valeur de type de pixel (PT) égale à « background » sont simplement transformés en une couleur choisie dans le fond.

**9.** Procédé selon l'une des revendications précédentes, **caractérisé en ce que** les seuils de couleur prédéterminés comprennent un seuil d'intensité sombre (D Int Th), et le seuil d'intensité sombre est fixé à une valeur d'intensité qui est supérieure à 99 % des intensités de tous les pixels « text » d'une image d'étalonnage.

**10.** Procédé selon l'une des revendications précédentes, **caractérisé en ce que** les seuils de couleur prédéterminés comprennent un seuil de saturation sombre (D Sat Th), et le seuil de saturation sombre est fixé à une valeur de saturation qui est supérieure à 99 % des saturations de tous les pixels « text » d'une image d'étalonnage.

**11.** Procédé selon l'une des revendications précédentes, **caractérisé en ce que** les seuils de couleur prédéterminés comprennent un seuil d'intensité de blanc (W Int Th), et le seuil d'intensité de blanc est fixé à une valeur d'intensité qui est inférieure à 99 % des intensités de tous les pixels « background » d'une image d'étalonnage.

**12.** Procédé selon l'une des revendications précédentes, **caractérisé en ce que** les seuils de couleur prédéterminés comprennent un seuil de saturation de blanc (W Sat Th), et le seuil de saturation de blanc est fixé à une valeur de saturation qui est supérieure à 99 % des saturations de tous les pixels « background » d'une image d'étalonnage.

**13.** Système de traitement d'une image numérique en gris ou en couleurs destiné à améliorer la reproduction des marques noires ou grises de ladite image, comprenant :

des moyens pour classer les pixels d'entrée en quatre classes de couleur différentes, désignées par : blanc (w), clair (l), couleur (c) et foncé (d), en déterminant pour chaque pixel, dans le système de coordonnées de couleurs Teinte, Saturation, Intensité, ses valeurs de saturation (S) et d'intensité (I) et en comparant les valeurs de saturation et d'intensité résultantes (S & I) à quatre seuils de couleur prédéterminés,
des moyens pour utiliser ladite classe de couleur (w, I, c, d) de chaque pixel individuel, ainsi que les classes de couleur des pixels d'une petite région avoisinante, pour classer en outre chaque pixel individuel en un type de pixel (PT) parmi quatre types de pixel désignés par : type fond, type texte, type gris et type image, en appliquant les règles suivantes :

si la classe de couleur du pixel individuel est « blanc », classer ledit pixel individuel comme étant de type fond, pour les classes de couleur de pixel non « blanc », additionner séparément les nombres de tous les pixels classés « clair » (l), « couleur » (c) et « sombre » (d) dans le voisinage du pixel individuel dans un filtre de sommation, en produisant ainsi trois nombres sommes ($\hat{d}$, $\hat{c}$ et $\hat{l}$) et utiliser ces nombres sommes comme trois indices dans une table de recherche (Text LUT) pour classer le type de pixel individuel (PT) comme candidats de texte, et appliquer un filtre supplémentaire de manière à ce que seuls les pixels qui sont des candidats de texte et qui ont des pixels de fond proches soient classés comme étant de type texte,
des moyens pour utiliser ledit type de pixel (PT) pour déterminer quel processus de correction de couleur doit être appliqué au pixel correspondant.

```
┌─────────────────────────────┐
│      Input RGB Image        │
└─────────────────────────────┘
              │
              ▼
┌ ─ ─ ─ ─ ─ ─ ─ ─ ─ ─ ─ ─ ─ ─ ─ ─ ─ ─ ┐
  ┌─────────────────────────────┐
│ │      Separate Pixels        │      │
  │     into Region Types       │
│ └─────────────────────────────┘      │
              │  │
│             ▼  ▼                      │
  ┌─────────────────────────────┐
│ │    Color correction and     │      │
  │    Conversion to CMYK       │
│ └─────────────────────────────┘      │
└ ─ ─ ─ ─ ─ ─ ─ ─ ─ ─ ─ ─ ─ ─ ─ ─ ─ ─ ┘
              │
              ▼
┌─────────────────────────────┐
│           Zoom              │
└─────────────────────────────┘
              │
              ▼
┌─────────────────────────────┐
│          Halftone           │
└─────────────────────────────┘
              │
              ▼
┌─────────────────────────────┐
│     Transmit to printer     │
└─────────────────────────────┘
```

Figure 1

Figure 2

Figure 3

Figure 4

d, c, l [0,1]

Summing Filter
5x5

d, c, l, w [0,1]

w [0,1]

$\hat{d}, \hat{c}, \hat{l}$
[0,25]

Dilate mxm
(m=9)

Dw
[0,1

AND

DTextlm [0,1]

Dilate mxm
(m=3)

Textlm [0,1]

Text LUT
Textlm=Table(d,c,l)

IsText
[0,1]

Figure 5

Figure 6

PT
[0:3]

RGB
Image
[0:255],
[0:255],
[0:255]

Pixel
Switchyard

Text

Convert
To True
Gray

Text LUT
(1D)

K

CMY(=Const)

Gray

Convert
To True
Gray

Gray LUT
(1D)

K

CMY(=Const)

Image

Color LUT
(3D)

K

CMY

Background

CMYK(=Const)

Figure 7

```
                                                      d, c, l [0,1]                            Summed Image
   Calibration          Calculate Quad                                  Summing Filter
     Image                 Images                                            5x5                   d̂, ĉ, l̂
                                                                                                  [0,25]
                        d, c, l, b [0,1]

                                                                                             Calculate Ave
                                                                                               Value in
                                                                                                d̂, ĉ, l̂
                                                                                                Space

                     Calibration By Eye
                     Text=1, Image=-1,                                                        Accumulate
                         Other=0                                                                Values

           Text                        >0?                                                Spatial Low Pass
         LUT [0,1]                                                                             Filter
```

Figure 8

20

**EP 1 605 684 B1**

REFERENCES CITED IN THE DESCRIPTION

**Patent documents cited in the description**

- US 6266439 B1
- EP 1385329 A